# EUROPEAN PATENT SPECIFICATION

(11) **EP 1 642 428 B1**
(45) Date of publication and mention of the grant of the patent: **12.08.2009**
(21) Application number: 04756462.0
(22) Date of filing: 29.06.2004
(51) Int. Cl.: H04L 12/56, G06F 17/30

(54) **Method for generating a trie having a reduced number of trie blocks**
Verfahren zur Trie-Erzeugung mit einer reduzierten Trie-Blockzahl
Procédé permettant de generer une arborescence à nombre de blocs limité

(30) Priority: 30.06.2003 US 611818
(43) Date of publication of application: 05.04.2006
(73) Proprietor: Intel Corporation, Santa Clara, CA 95052 (US)
(72) Inventor: RAGHUNANDAN, Makaram, Northborough, MA 01532 (US)
(74) Representative: Dunlop, Hugh Christopher
(86) International application number: PCT/US2004/021085
(87) International publication number: WO 2005/006681

(56) References cited:
- EP-A- 1 265 161
- GB-A- 2 350 534
- RAVIKUMAR V C ET AL: "Modified LC-trie based efficient routing lookup" IEEE MASCOTS'02, 11 October 2002 (2002-10-11), pages 177-182, XP010624430
- RUIZ-SANCHEZ M A ET AL: "SURVEY AND TAXONOMY OF IP ADDRESS LOOKUP ALGORITHMS" IEEE NETWORK, IEEE INC. NEW YORK, US, vol. 15, no. 2, March 2001 (2001-03), pages 8-23, XP002901792 ISSN: 0890-8044
- LIU H: "Routing Table Compaction in Ternary CAM" IEEE MICRO, vol. 22, no. 1, January 2002 (2002-01), - February 2002 (2002-02) pages 58-64, XP002298995 USA
- EATHERTON W N: "Hardware-Based Internet Protocol Prefix Lookups" MASTER OF SCIENCE THESIS, May 1999 (1999-05), pages 1-100, XP002298996 WASHINGTON, USA Retrieved from the Internet: URL:http://www.arl.wustl.edu/~jst/studentT heses/wEatherton-1999.pdf> [retrieved on 2004-10-04]

## Description

### TECHNICAL FIELD

Embodiments of the invention are generally related to the field of computer networking and, in particular, to generating a trie having a reduced number of trie blocks.

### BACKGROUND

A network is a group of two or more computer systems linked by wired or wireless connections. Data, typically in the form of a packet, is transmitted from a source computer system at which the packet originates, to a destination computer system. Examples of source and destination computer systems include a desktop computer, a personal digital assistant, or a mobile or laptop computer. The computer systems in a network are commonly referred to as nodes.

A packet typically travels through intermediate computer systems during transmission. An example of an intermediate computer system is a router. A router is a packet-forwarding device that receives a packet and determines a next node, commonly referred to as a next hop, to which to forward the packet on the route to its destination.

To determine a next hop, the router typically searches its routing table. In general, a routing table is a data structure that includes a plurality of entries, which are searched via prefixes. Associated with each prefix is the address of the computer system that is the next hop. When a packet arrives at a router, a search algorithm typically identifies the packet's destination address, and searches for a prefix that matches the destination address. When the algorithm identifies the matching prefix, the packet is forwarded to the next hop associated with that prefix.

A routing table may be implemented as a trie. A trie is a tree data structure made up of trie blocks. In general, prefixes to be added to a routing table are divided into portions, e.g., a 32-bit prefix may be divided into a first portion comprising the first 14 bits of the prefix, a second portion comprising the next 6 bits, a third portion comprising the next 3 bits, a fourth portion comprising the next 5 bits and a final portion comprising the last 4 bits. This may be described as a 14-6-3-5-4 trie structure. The size of each portion of the prefix depends on the size of the trie block that corresponds to that portion. Thus, the first portion, referred to herein as the root portion, is 14 bits long, which corresponds to the size of a 14-bit trie block, referred to herein as a root trie block, for the root portion. A prefix may be divided into any number of portions, the size of which may be any number of bits according to the size of the corresponding trie block.

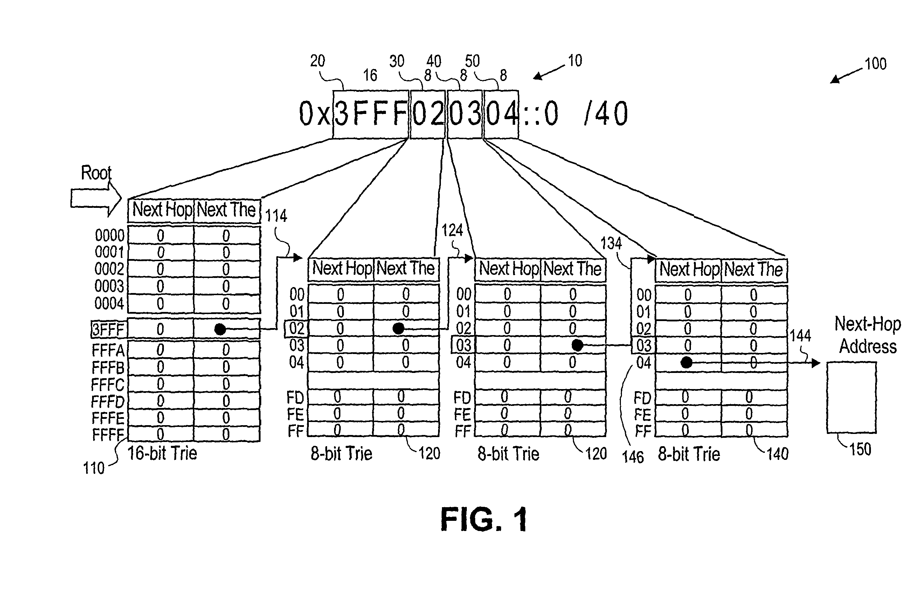

Each portion of a prefix corresponds to a matching index in the trie block for that portion, and each index identifies a trie entry. The trie entry, referred to herein as the root trie entry, identified by the index that matches the root portion of the prefix includes a pointer to another trie block, referred to herein as a linked trie block. The trie entries of the linked trie block, referred to herein as linked trie entries, are identified by indexes that match the next portion of each prefix that begins with the same root portion (see Fig. 1).

Thus, an index in the linked trie block matches the portion of the prefix following the root portion, and that index identifies a linked trie entry. A linked trie entry may include a next hop pointer, a next trie block pointer, or both. If the index identifying the linked trie entry matches the last portion of the prefix, the linked trie entry will include a next hop pointer that points to the address of the next hop associated with the prefix. However, if the index identifying the linked trie entry matches an intermediate portion between the root portion and the last portion of the prefix, the linked trie entry will include a next trie block pointer to a next linked trie block. Finally, the linked trie block may include a next hop pointer and a next trie block pointer, if the index identifying the linked trie entry matches the last portion of one prefix stored in the trie, but matches an intermediate portion of a longer prefix stored in the trie.

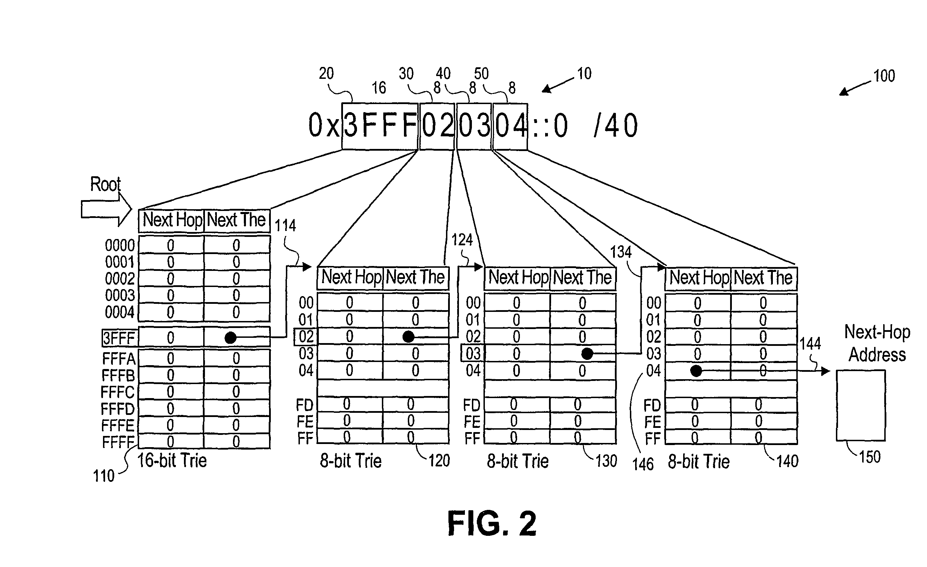

When searching for a next hop address in a trie, a search algorithm searches the root trie block corresponding to the size of the root portion of the address for a root trie entry identified by the index that matches the root portion of the address. Once the algorithm finds this root trie entry, the algorithm determines whether the root trie entry points to a next hop and/or a next trie block, and accesses the next hop address or the linked trie block, as applicable. The algorithm continues to search until a trie entry provides neither a linked trie block nor a next hop, or provides a next hop but not a linked trie block. At that point, the trie entry identified by the index that matches the latest portion of the address and points to a next hop address, is the trie entry that provides the next hop (see Fig. 2 described below).
EATHERTON W N in "Hardware-Based Internet Protocol Prefix Lookups" Master of Science Thesis, May 1999, Sever Institute of Washington University, USA discloses various routing schemes based on trie structures. In particular, a path compression scheme is described for a typical the data structure that is used for searching for network addresses associated with a prefix of the destination address of a data packet. A skip length value is inserted in every node of the trie data structure, in which the skip length value provides an indication of how many nodes below the current node can be skipped by the search algorithm. Although the prefix search then skips parts of the prefix that were to be searched, the skipped portions of the prefix may not necessarily match the corresponding bits of the prefix of the possible network address that is retrieved. Since the resulting network address would be incorrect due to a mismatch, the search algorithm needs to check whether the network address prefix retrieved from the trie data structure matches with the destination address prefix of the data packet.

Each time the search algorithm accesses a different trie block, the algorithm executes a memory access. For example, a 14-6-3-5-4 trie structure includes five trie blocks, and thus may involve up to five memory accesses to find a next hop. The number of memory accesses executed to determine a next hop affects a router's performance. As the number of memory accesses increases, so does the amount of time used to determine the next hop and the amount of memory used. Thus, searching a large number of trie blocks negatively impacts a router's performance. Consequently, reducing the number of trie blocks searched would improve a router's performance.

The invention is defined by the subject-matter of the claims.

### BRIEF DESCRIPTION OF THE DRAWINGS

Embodiments of the invention are illustrated by way of example, and not by way of limitation, in the figures of the accompanying drawings in which like reference numerals refer to similar elements.
**Fig. 1** is an illustration of adding an entry to a routing table implemented as a trie data structure.
**Fig. 2** is an illustration of an example search of a trie data structure.
**Fig. 3** is a flow diagram illustrating an example embodiment of a method of generating a trie data structure having a reduced number of trie blocks.
**Fig. 4** is an illustration of an example embodiment of a trie data structure having a reduced number of trie blocks.
**Fig. 5** is an illustration of another example embodiment of a trie data structure having a reduced number of trie blocks.
**Fig. 6** is an illustration of yet another example embodiment of a trie data structure having a reduced number of trie blocks.
**Fig. 7** is an illustration of an additional example embodiment of a trie data structure having a reduced number of trie blocks.
**Fig. 8** is a flow diagram illustrating an example embodiment of a method of searching a trie data structure having a reduced number of trie blocks.
**Fig. 9** is an illustration of an example embodiment of searching a trie data structure having a reduced number of trie blocks.
**Fig. 10** is a block diagram illustrating one embodiment of an electronic system.

### DETAILED DESCRIPTION

A method of generating a trie having a reduced number of trie blocks is described. In the following description, for purposes of explanation, numerous specific details are set forth. It will be apparent, however, to one skilled in the art that embodiments of the invention can be practiced without these specific details. In other instances, structures and devices are shown in block diagram form in order to avoid obscuring the understanding of this description.

An algorithm identifies a prefix to be to be added to a trie. The algorithm separates the prefix into portions having sizes based, at least in part, on sizes related to trie blocks in the trie. The algorithm indicates in a trie entry of a first trie block, wherein a first portion of the prefix identifies the trie entry, that a second portion of the prefix is stored in a trie entry in the first trie block or a linked trie block. The portion of the prefix stored in a trie entry is referred to herein as the trie-entry portion of the prefix, and the trie entry in which the trie-entry portion is stored is referred to herein as the pruned-trie entry. The algorithm also indicates in the trie entry of the first trie block a location of a linked trie block, and stores the trie-entry portion in the pruned-trie entry. In addition, the algorithm indicates in the pruned-trie entry the position the trie-entry portion occupies in the prefix relative to other portions of the prefix.

**Fig. 1** is an illustration of an example of adding a trie entry to a routing table implemented as a trie data structure. Trie data structure 100 includes root trie block 110 and linked trie blocks 120, 130 and 140. The 40-bit prefix 3FFF020304 (10) in this example is in hexadecimal format, meaning that each bit represents four bits. The prefix is divided into a 16-bit root portion 20 and three 8-bit portions 30, 40 and 50. The size of each portion corresponds to the size of a trie block for that portion. The root trie block may correspond to any size first portion of the prefix, whether determined beginning at the left-most bit (commonly referred to as big-endian representation) or at the right-most bit of the prefix (commonly referred to as little-endian representation).

The index 3FFF in root trie block 110 matches root portion 20. Because root portion 20 is not the last portion of prefix 10, pointer 114 points to linked trie block 120, which stores data for the next portions of prefixes that share 3FFF as their root portion. That is, each trie entry in a trie block points to a different linked trie block, which stores data for the next portions of each prefix containing the portion that matches the index identifying the trie entry.

Index 02 in linked trie block 120 matches second portion 30. Because second portion 30 is not the last portion of prefix 10, pointer 124 points to linked trie block 130, which stores data for the next portions of prefixes that share 3FFF as their root portion and 02 as the portion following the root portion. Similarly, index 03 in linked trie block 130 matches third portion 40. Because third portion 40 is not the last portion of prefix 10, pointer 134 points to linked trie block 140, which stores data for the next portions of prefixes that share 3FFF as their root portion, 02 as their second portion and 03 as their third portion. Index 04 in linked trie block 140 matches fourth portion 50. Because fourth portion 50 is the last portion of prefix 100, pointer 144 points to next hop address 150.

**Fig. 2** is an illustration of an example search of a routing table implemented as a trie data structure. If a packet has a destination address of 3FFF020306070809 (200) in hexadecimal format, the algorithm finds index 3FFF in root trie block 110 that matches root portion 202. Trie entry 112 identified by index 3FFF includes pointer 114, which points to linked trie block 120. Index 02 in trie block 120 matches portion 204. Trie entry 122 identified by index 02 includes linked trie block pointer 124, which points to linked trie block 130.

Index 03 in trie block 130 matches portion 206. Trie entry 132 identified by index 03 includes linked trie block pointer 134, which points to linked trie block 140, and next hop pointer 136, which points to next-hop address 160. Index 06 in trie block 140 matches portion 208. Trie entry 148 identified by index 06 does not include a next hop pointer or a next trie pointer. Consequently, there is no match for 06 or the remainder of the address, i.e., 070809. Thus, the prefix 0x3FFF0203 is used to route this address, and trie entry 132 corresponding to the latest matching portion of the address, i.e., 03, provides the next-hop address.

If the last portion of address 200 in Fig. 2 had been 04, trie entry 146 identified by index 04 would include a next hop pointer but no next trie pointer. Thus trie entry 146 would provide the next-hop address. In any event, whether the last portion of the address is 06 or 04, the algorithm makes four memory accesses, because of the four trie blocks. Reducing the number of trie blocks would reduce the number of memory accesses and speed up determining the next hop. In addition, reducing the number of trie blocks would also reduce the amount of memory used, thereby, among other things, allowing more entries in a routing table, reducing circuit board size (or chip size) because less memory is needed, and reducing power consumption.

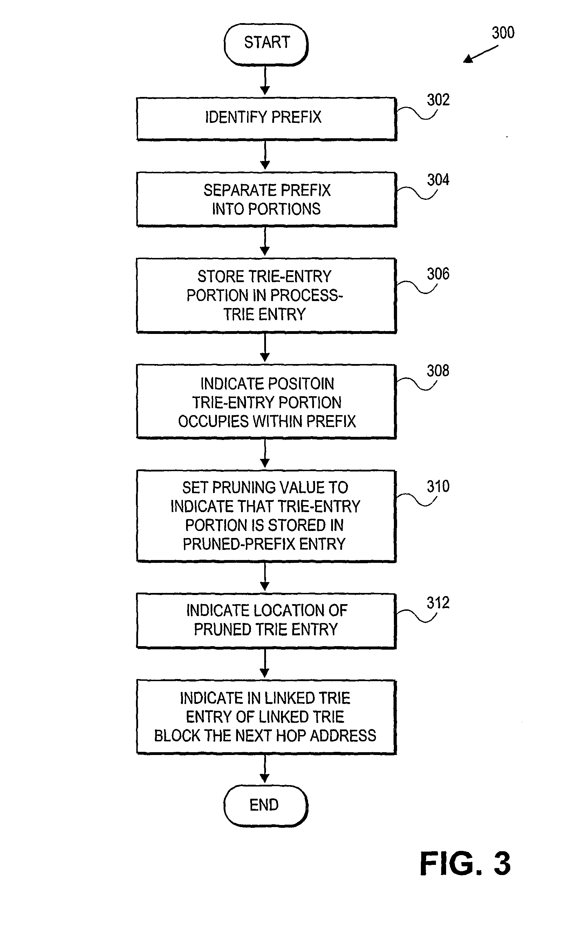

**Fig. 3** is a flow diagram illustrating an example embodiment of a method of generating a trie data structure having a reduced number of trie blocks. At 302 of method 300, an algorithm identifies a prefix to be added to a trie data structure. The algorithm may identify the prefix in any manner known in the art.

At 304, the algorithm separates the prefix into portions, where the sizes are related to the trie blocks in the trie to which the prefix is to be added. The prefix may be divided into any number of portions, the size of which may be any number of bits according to the size of the corresponding trie block. For example, the Internet Protocol (IP) is a protocol for routing packets, and in IP version 4 (IPv4), a 32-bit prefix may be divided into a 16-4-4-4-4 trie structure. In IPv6, for example, a 64-bit prefix may be divided into a 16-8-8-8-8-8-8 trie structure. See, e.g., Internet Engineering Task Force (IETF) Request for Comments (RFC) 1812, "Requirements for IP Version 4 Routers," June 1995; IETF RFC 2460, "Internet Protocol, Version 6 (IPv6) Specification," December 1998.

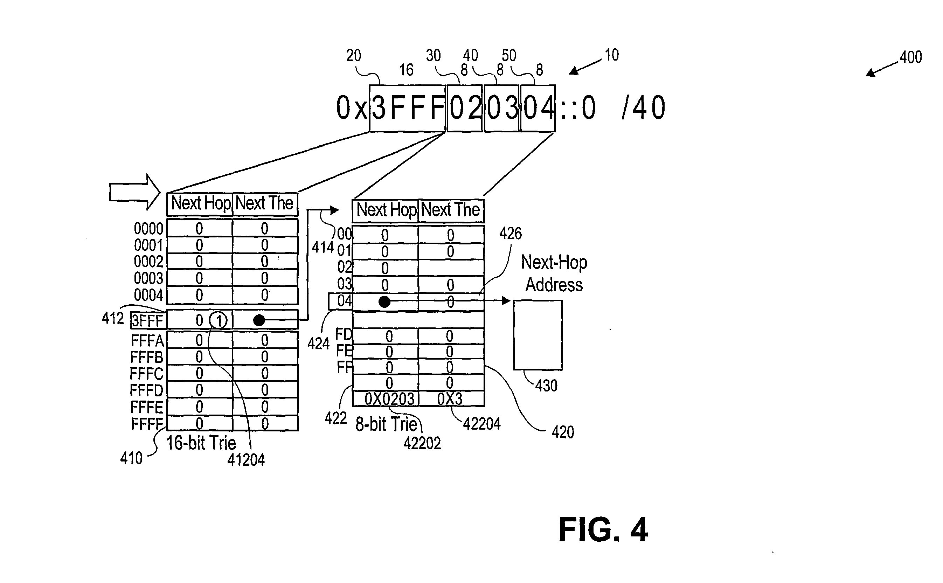

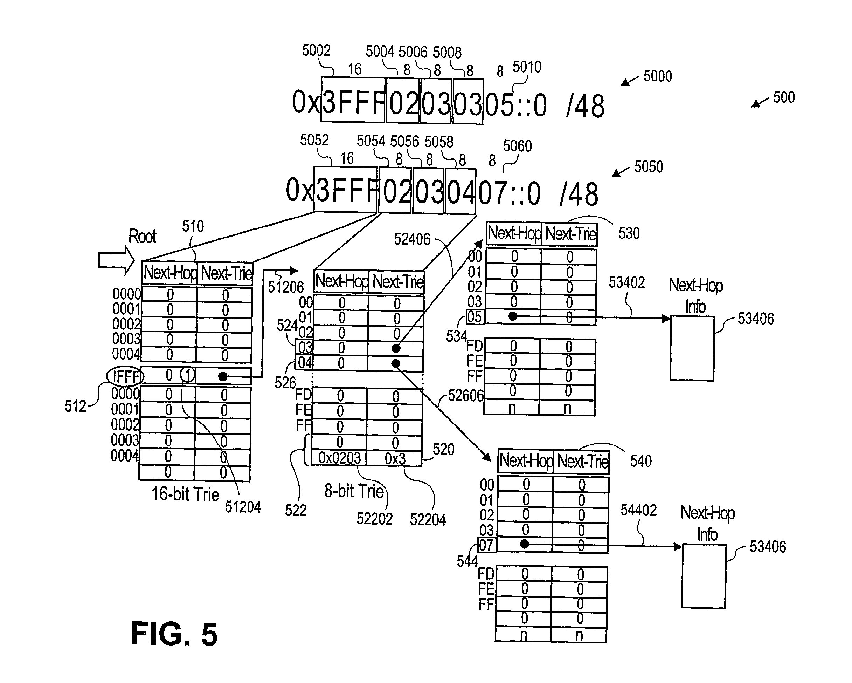

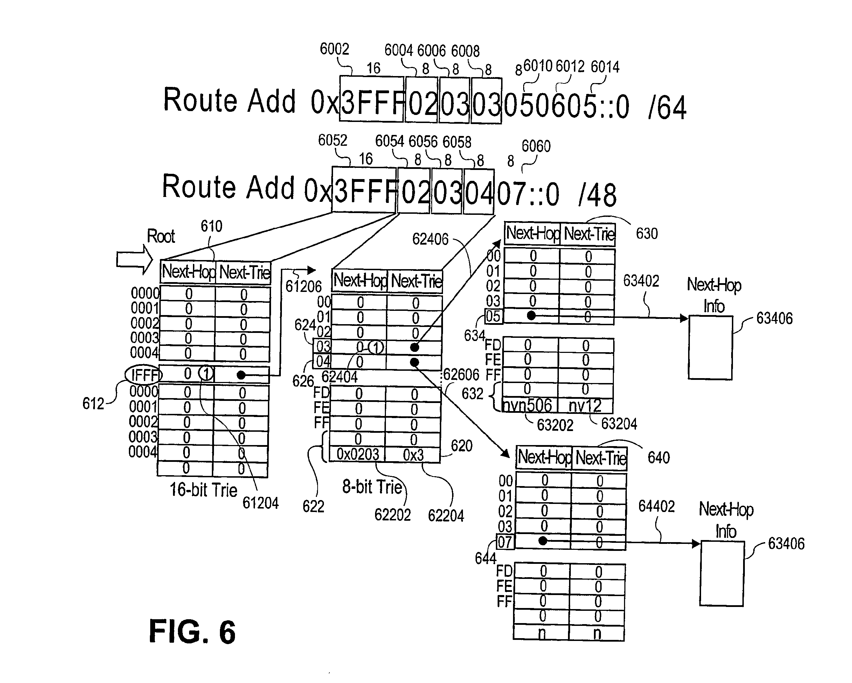

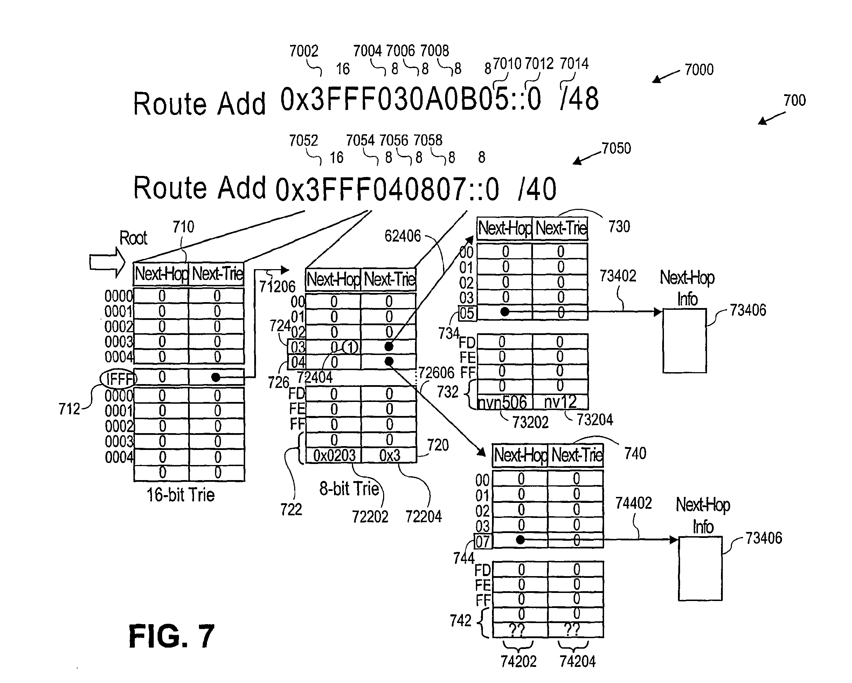

At 306, the algorithm stores a portion of the prefix, referred to herein as the trie-entry portion, in a pruned-trie entry. The trie-entry portion would otherwise relate to a matching index in a trie block corresponding to the size of the trie-entry portion. The trie-entry portion may be the next portion following the root portion of the prefix (see, e.g., Fig. 4, Fig. 5 and Fig, 6). In addition, the trie-entry portion may be the next portion of the prefix following a portion other than the root portion (see, e.g., Fig. 7); a portion of the prefix other than the root portion is also referred to herein as a non-root portion. Furthermore, the trie-entry portion may be followed by another portion of the prefix that is not a trie-entry portion, which may be followed by another trie-portion (see, e.g., Fig. 6). The trie-entry portion may be stored in the pruned-trie entry of a linked trie block. The trie-entry portion may also be stored in a pruned-trie entry of the trie block corresponding to portion of the prefix preceding the trie-entry portion, where the portion of the prefix preceding the trie-entry portion identifies the pruned-trie entry.

For purposes of illustration and ease of explanation, method 300 is described in terms of storing one portion of a prefix in the pruned-trie entry. However, more than one portion of a prefix may be stored in a pruned-trie entry. That is, any number of portions of the prefix, which would otherwise relate to matching indexes in separate trie blocks that correspond to the size of each portion, may be stored in a pruned-trie entry (see, e.g., Fig. 7). In addition, a trie block can have more than one pruned-trie entry.

At 308, the algorithm indicates the position the trie-entry portion occupies within the prefix relative to the other portions of the prefix. In one embodiment, the algorithm adds to the pruned-trie entry a range of bit positions that corresponds to the bit positions the trie-entry portion occupies within the prefix. In an alternative embodiment, the algorithm adds to the pruned-trie entry a mask that indicates the bit positions the trie-entry portion occupies within the prefix. Thus, in one embodiment, a pruned-trie entry includes the trie-entry portion of the prefix and an indication of the position the trie-entry portion occupies within the prefix.

At 310, the algorithm indicates, in a trie entry of a trie block, that the trie-entry portion is stored in the pruned-trie entry, where the trie block corresponds to the portion of the prefix that precedes the trie-entry portion, and the trie entry is identified by an index that matches the portion of the prefix that precedes the trie-entry portion. In one embodiment, the algorithm sets a value, referred to herein as a pruning value, to indicate that the trie-entry portion is stored in the pruned-trie entry, where the pruning value is a bit that is set to 1 (or 0) to indicate that a portion of the prefix is stored in a pruned-trie entry, or set to 0 (or 1) to indicate that no pruning has occurred. However, the pruning value is not limited to being a bit, for example, the pruning value may be the trie-entry portion itself stored in the trie entry identified by the index that matches the portion of the prefix that precedes the trie-entry portion, a pointer to the pruned-trie entry in a linked trie block, or a memory address indicating the location of the pruned-trie entry.

At 312, the algorithm indicates the location of a linked trie block. In one embodiment, a pointer in a trie entry is set to indicate the location of the linked trie block. However, the location of the linked trie block is not limited to being indicated by a pointer, for example, an identifier may be used to indicate the address of the linked trie block.

As explained previously, each trie entry in a trie block points to or otherwise indicates a different trie block, because all of the next-hop and next trie block information for the next portions of the prefixes that contain the portion that matches the index are stored in the same trie block. Thus, it is possible that a trie entry may already indicate a linked trie block, e.g., data for a 24-bit prefix is added to a 16-bit root trie block that points to an 8-bit linked trie block, and thus no portion of the prefix was stored as a trie-entry portion in the linked trie block. In that case, because the linked trie block is already indicated, the algorithm need not indicate the location of linked trie block.

At 314, the algorithm indicates in a linked trie entry of a linked trie block the location of the next-hop address associated with the prefix, where the trie entry is identified by an index matching the final portion of the prefix. In one embodiment, a pointer in the next-hop field of the trie entry is set to indicate a location of the next-hop address. However, indication of the next-hop address is not limited to a pointer, for example, a device address of a computer system along the route to the packet's destination, i.e., the address of an intermediate computer system or the address of the destination computer system itself, may be added to the next-hop field of the root trie entry to indicate the next-hop address.

**Fig. 4** is an illustration of an example embodiment of a trie data structure having a reduced number of trie blocks. As compared to Fig. 1, trie data structure 400 includes root trie block 410 and linked trie block 420, rather than trie blocks 110, 120, 130 and 140. Trie entry 412 is identified by index 3FFF, which matches root portion 20. Pruning value 41204 is a bit set to 1, to indicate that the pruned-trie entry of the indicated linked trie block should be searched, and linked trie-block pointer 414 points to linked trie block 420.

Second portion 30 and third portion 40 have been stored as trie-entry portion 42202 in pruned-trie entry 422. In addition, mask 42204, i.e., the value 0x3, indicates that second portion 30 and third portion 40 occupy bit positions 16-31 from the left in prefix 10, where the first bit position from the left is bit position 0. Finally, next-hop pointer 426 in linked trie entry 424 identified by the index 04, which matches final portion 50, points to next-hop address 430. Therefore, a trie is generated having a reduced number of trie blocks relative to current tries. This reduces the number of memory accesses to determine a next hop, and increases the speed of determining the next hop. This also reduces the amount of memory used, thereby, among other things, allowing more entries in a routing table, reducing circuit board size (or chip size) because less memory is needed, and reducing power consumption. Reducing the number of memory accesses and the amount of memory used improves the performance of a router or other device, e.g., a switch, a hub or a bridge, that determines a next node to which to forward a packet on the route to its destination.

**Fig. 5** is an illustration of another example embodiment of a trie data structure having a reduced number of trie blocks. Trie data structure 500 includes root trie block 510, linked trie block 520, which is the linked trie block for prefixes having 3FFF as the root portion, trie block 530, which is the linked trie block for prefixes having 02, 03 and 03 as their second, third and fourth portions, respectively, and trie block 540, which is the linked trie block for prefixes having 02, 03 and 04 as their second, third and fourth portions, respectively. Trie entry 512 is identified by index 3FFF, which matches root portion 5002 of prefix 5000 and root portion 5052 of prefix 5050. Pruning value 51204 is a bit set to 1, to indicate that the pruned-trie entry of the indicated linked trie block should be searched, and linked trie-block pointer 51206 points to linked trie block 520.

Second portions 5004 and 5054, and third portions 5006 and 5056 have been stored as trie-entry portion 52202 in pruned-trie entry 522. In addition, mask 52204, i.e., the value 0x3, indicates that second portions 5004 and 5054, and third portions 5006 and 5056 occupy bit positions 16-31 from the left in prefixes 5000 and 5050, respectively, where the first bit position from the left is bit position 0.

Next-trie block pointer 52406 in linked trie entry 524 identified by the index 03, which matches fourth portion 5008, points to next trie block 530, while next-hop pointer 53402 in linked trie entry 534 identified by the index 05, which matches final portion 5010, points to next-hop address 53406. Similarly, next-trie block pointer 52606 in linked trie entry 526 identified by the index 04, which matches fourth portion 5058, points to next trie block 540, while next-hop pointer 54402 in linked trie entry 544 identified by the index 07, which matches final portion 5060, points to next-hop address 54406.

**Fig. 6** is an illustration of yet another example embodiment of a trie data structure having a reduced number of trie blocks. Trie data structure 600 includes root trie block 610, linked trie block 620, which is the linked trie block for prefixes having 3FFF as the root portion, trie block 630, which is the linked trie block for prefixes having 02, 03 and 03 as their second, third and fourth portions, respectively, and trie block 640, which is the linked trie block for prefixes having 02, 03 and 04 as their second, third and fourth portions, respectively. Trie entry 612 is identified by index 3FFF, which matches root portion 6002 of prefix 6000 and root portion 6052 of prefix 6050. Pruning value 61204 is a bit set to 1, to indicate that the pruned-trie entry of the indicated linked trie block should be searched, and linked trie-block pointer 61206 points to linked trie block 620.

Second portions 6004 and 6054, and third portions 6006 and 6056 have been stored as trie-entry portion 62202 in pruned-trie entry 622. In addition, mask 62204, i.e., the value 0x3, indicates that second portions 6004 and 6054, and third portions 6006 and 6056 occupy bit positions 16-31 from the left in prefixes 6000 and 6050, respectively, where the first bit position from the left is bit position 0.

Pruning value 62404 in linked trie entry 624 identified by the index 03, which matches fourth portion 6008, is a bit set to 1, to indicate that the pruned-trie entry of the indicated linked trie block should be searched. By contrast, the pruning value in linked trie entry 626 identified by the index 04, which matches portion 6058, is not set, which indicates that the pruned-trie entry of the indicated linked trie block need not be searched. Fifth portion 6010 and sixth portion 6012 of prefix 6000 have been stored as trie-entry portion 63202 in pruned-trie entry 632 of trie block 630. In addition, mask 63204, i.e., the value 0x18, indicates that fifth portion 6010 and sixth portion 6012 occupy bit positions 40-55 in prefix 6000.

Next-trie block pointer 62406 in linked trie entry 624 points to next trie block 630, while next-hop pointer 63402 in linked trie entry 634 identified by the index 05, which matches fifth portion 6010, points to next-hop address 63406. Similarly, next-trie-block pointer 62606 in linked trie entry 626 points to next trie block 640, while next-hop pointer 64402 in linked trie entry 644 identified by the index 07, which matches final portion 6060, points to next-hop address 64406.

**Fig. 7** is an illustration of an additional example embodiment of a trie data structure having a reduced number of trie blocks. Trie data structure 700 includes root trie block 710, linked trie block 720, which is the linked trie block for prefixes having 3FFF as the root portion, trie block 730, which is the linked trie block for prefixes having 03 as their second portion, and trie block 740, which is the linked trie block for prefixes having 04 as their second portion. Trie entry 712 is identified by index 3FFF, which matches root portion 7002 of prefix 7000 and root portion 7052 of prefix 7050, has linked trie-block pointer 71206 points to linked trie block 720.

Pruning value 72404 in linked trie entry 724 identified by the index 03, which matches second portion 7004 of prefix 7000, is a bit set to 1, to indicate that the pruned-trie entry of the indicated linked trie block should be searched. Third portion 7006 and fourth portion 7008 have been stored as trie-entry portion 73202 in pruned-trie entry 732 of trie block 730. In addition, mask 73204, i.e., the value 0x6, indicates that third portion 7006 and fourth portion 7008 occupy bit positions 24-39 in prefix 7000.

Similarly, pruning value 72604 in linked trie entry 726 identified by the index 04, which matches second portion 7054 of prefix 7050, is a bit set to 1, to indicate that the pruned-trie entry of the indicated linked trie block should be searched. Third portion 7056 of prefix 7050 has been stored as trie-entry portion 74202 in pruned-trie entry 742 of trie block 740. In addition, mask 74204, i.e., the value 0x2, indicates that third portion 7006 occupies bit positions 24-31 in prefix 7050.
Next-trie block pointer 72406 in linked trie entry 724 points to next trie block 730, while next-hop pointer 73402 in linked trie entry 734 identified by the index 05, which matches final portion 7010, points to next-hop address 73406. Similarly, next-trie block pointer 72606 in linked trie entry 726 points to next trie block 740, while next-hop pointer 74402 in linked trie entry 744 identified by the index 07, which matches final portion 7058, points to next-hop address 74406.

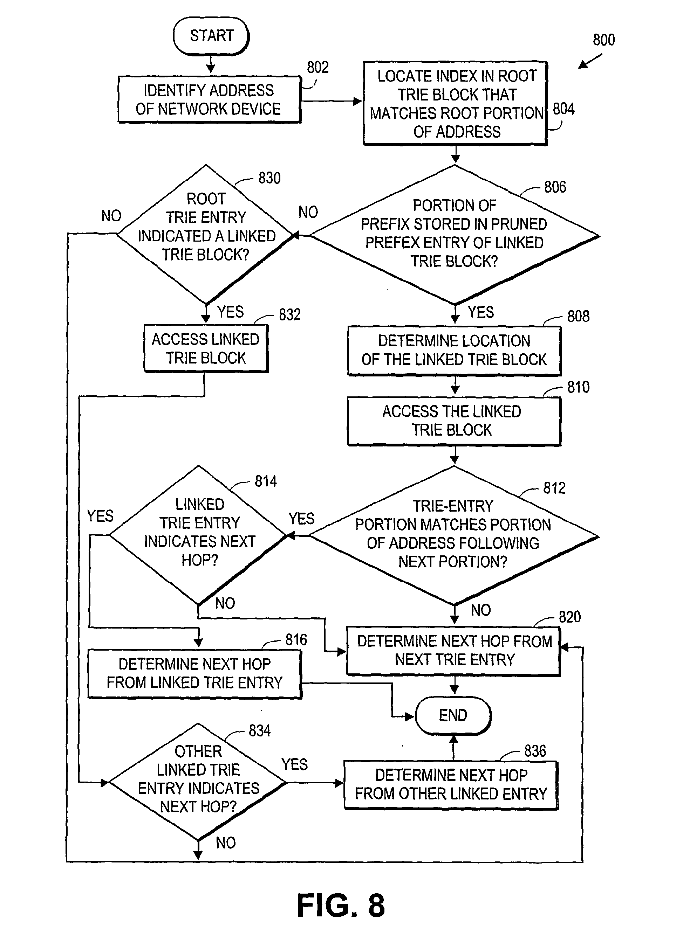

**Fig. 8** is a flow diagram illustrating an example embodiment of a method of searching a trie data structure having a reduced number of trie blocks. At 802 of method 800, an algorithm identifies in a data packet an address of a network device. In one embodiment, the address is a destination address. However, the address is not limited to a destination address, e.g., the address may be a source address. In one embodiment, the address is an IPv6 address. However, the address is not limited an IPv6 address in particular, e.g., the address may be an IPv4 address, nor is the address limited to an IP address in general. The algorithm may identify the prefix in any manner known in the art.

At 804, the algorithm locates in a root trie block an index that matches the root portion of the address. The index corresponds to a root portion of a prefix stored in the trie and identifies a root trie entry. For purposes of illustration and ease of explanation, method 800 is described in terms of a trie-entry portion that begins with the first portion of the prefix following the root portion. However, method 800 is not limited to a trie-entry portion that begins with the portion of the prefix following the root portion. That is, the trie-entry portion may begin with a portion of the prefix other than the portion following the root portion, see e.g., Fig. 6 and Fig. 7.

At 806, the algorithm determines whether the pruning value in the root trie entry identified by the matching index indicates, e.g., based on a pruning value set to 1, that a trie-entry portion of the prefix whose root portion matches the index is stored in a pruned-trie entry of a linked trie block. For purposes of illustration and ease of explanation, method 800 is described in terms of a bit as a pruning value to indicate that the trie-entry portion is stored in a pruned-trie entry. However, method 800 is not limited to a bit as a pruning value, e.g., the pruning value may be the trie-entry portion itself stored in the trie entry identified by the index that matches the portion of the prefix that precedes the trie-entry portion, a pointer to the pruned-trie entry in a linked trie block, or a memory address indicating the location of the pruned-trie entry.

If the root trie entry indicates that a portion of the prefix is stored in a pruned-trie entry of a linked trie block, at 808 the algorithm determines from the root trie entry the location of the pruned-trie entry. In one embodiment, the pruned-trie entry is located in a linked trie block, and a pointer in the next trie-block field of the root trie entry is set to indicate the location of the linked trie block. The location of the linked trie block is not limited to being indicated by a pointer, for example, a memory address of the linked trie block may be added to the next trie-block field of the root trie entry to indicate the location of the linked trie block. In another embodiment, the pruned-trie entry is located in the root trie block, or other trie block corresponding to the portion of the address that precedes the trie-entry portion, and the portion of the address that precedes the trie-entry portion identified the location of the pruned-trie entry. For purposes of illustration and ease of explanation, method 800 is described in terms of a linked trie block as the location of the pruned-trie entry. At 810, the algorithm accesses the linked trie block.

At 812, the algorithm determines whether a trie-entry portion in a pruned-trie entry of the linked trie block matches a portion of the address following the root portion. For purposes of illustration and ease of explanation, method 800 is described in terms of determining whether one portion of a prefix matches a corresponding portion of an address. However, the determination may be whether more than one portion of a prefix matches corresponding portions of the address. If the trie-entry portion does not match the portion of the address following the root portion, at 820, the algorithm determines from the root trie entry the address of a next hop to which to forward the data packet. Thus, the failure of that portion of the address to match the trie-entry portion indicates that a prefix matching the packet's address has not been stored in the trie.

Conversely, if at 812 a trie-entry portion matches the portion of the address following the root portion, at 814 the algorithm determines whether a linked trie entry in the linked trie block, which is identified by a portion of the prefix following the trie-entry portion, indicates a next hop address. In one embodiment, a pointer in the next-hop field of the trie entry is set to indicate a location of the next-hop address. However, indication of the next-hop address is not limited to a pointer, for example, a device address of a computer system along the route to the packet's destination, i.e., the address of an intermediate computer system or the address of the destination computer system itself, may be added to the next-hop field of the root trie entry to indicate the next-hop address.

If the linked trie entry does not indicate a next hop, at 820 the algorithm determines the next hop address from the root trie entry. Thus, the failure of the linked trie entry to indicate a next hop address means that a prefix matching the packet's address has not been stored in the trie. Conversely, if the linked trie entry indicates a next hop address, at 816 the algorithm determines the next hop address from the linked trie entry. In one embodiment, a pointer in the next-hop field of the trie entry is set to indicate a location of the next-hop address. However, indication of the next-hop address is not limited to a pointer, for example, a device address of a computer system along the route to the packet's destination, i.e., the address of an intermediate computer system or the address of the destination computer system itself, may be added to the next-hop field of the root trie entry to indicate the next-hop address.

Returning to 806, if the root trie entry indicates, e.g., based on a pruning value set to 0, that no portion of the prefix is stored in a pruned-trie entry, at 830 the algorithm determines whether the root tire entry indicates the location of a linked trie block. If the root trie entry does not indicate the location of a linked trie block, at 820, the algorithm determines from the root trie entry the address of the next hop.

Conversely, if at 830 the root entry indicates a linked trie block, at 832 the algorithm accesses the linked trie block. At 834, the algorithm determines whether a linked trie entry identified by an index that matches an intermediate portion of the address following the root portion, rather than by an index that matches the last portion of the address following the trie-entry portion as described above, indicates a next hop address. If the linked trie entry does not indicate a next hop address, at 820 the algorithm determines from the root trie entry the next hop address. However, if the linked trie entry indicates a next hop address, at 836 the algorithm determines the next hop address from the linked trie entry.

Method 800 is described in terms of a trie data structure consisting of two trie blocks, i.e., the root trie block and a linked trie block, and determining the next hop from a root trie entry in the root trie block, or from a linked trie entry in the linked trie block. However, method 800 may be used with a trie data structure having more than two trie blocks, see, for example, Figs. 5, 6 and 7.

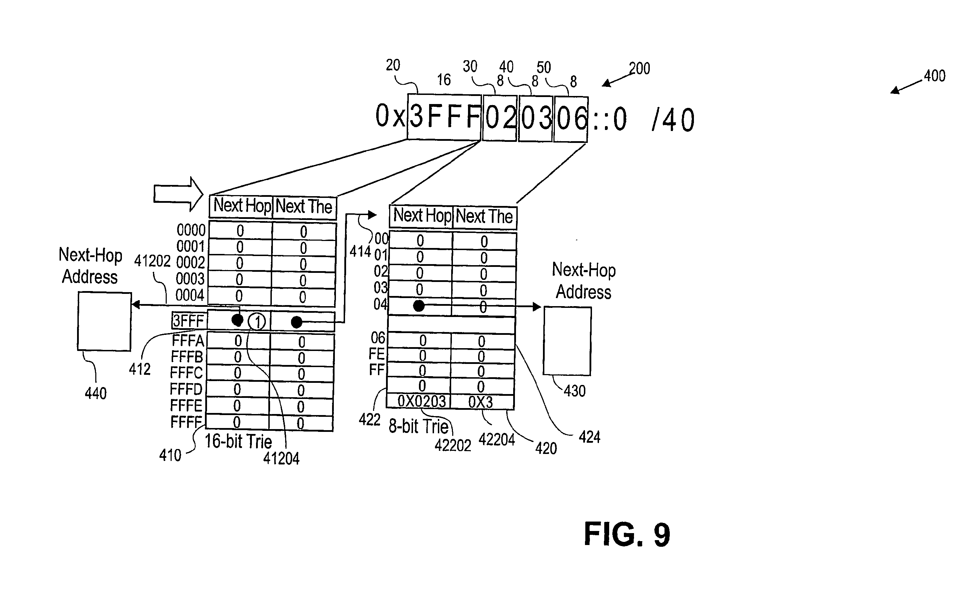

**Fig. 9** is an illustration of an example embodiment of searching a trie data structure having a reduced number of trie blocks. As in Fig. 2, an algorithm identifies a packet's destination address as 3FFF020306 (200) in hexadecimal format. In Fig. 9, index 3FFF in root trie block 410 matches root portion 202 and identifies root trie entry 412. The algorithm determines from pruning value 41204 that a portion of the prefix that has 3FFF as the root portion is stored in a pruned-trie entry. Next trie pointer 414 points to linked trie block 420, and thus the algorithm accesses linked trie block 420.

Because pruning value 41204 indicates that a portion of the prefix is stored in a pruned-trie entry, the algorithm searches the pruned entries of linked trie block 420. The algorithm determines from mask 42204, i.e., the value 0x3, that trie-entry portion 42202 occupies bit positions 16-31 from the left in its prefix, where the first bit position from the left is bit position 0. The algorithm determines that trie-entry portion 42202 matches second portion 204 and third portion 206, which occupy corresponding bit positions in address 200.

Because there is a match, the algorithm determines whether a linked trie entry 424 identified by index 06, which matches fourth portion 208 of address 200, indicates a next-hop address. Linked trie entry 424 does not indicate a next-hop address. Thus, trie entry 412, which includes next-hop pointer 41202 that points to next-hop address 440, indicates the next hop.

For purposes of illustration and ease of explanation, method 300 and method 500 have been described in terms of storing a prefix to a trie data structure and searching for an address that matches a prefix in a trie data structure. However, method 300 and method 500 may be used to store any data in a trie data structure having a reduced number of trie blocks, and search for any data in such a trie data structure. For example, by way of illustration, and not for purposes of limitation, method 300 may be used to store a plurality of words in a trie data structure having a reduced number of trie blocks, and ultimately indicate a definition, correct spelling, synonym, etc., associated with each word, analogous to a next hop address associated with a prefix. Similarly, again by way of illustration, and not for purposes of limitation, method 500 may be used to search for words in a trie data structure having a reduced number of trie blocks, in connection with locating a definition, correct spelling, synonym, etc., associated with a searched word.

Fig. 3 and Fig 8 describe example embodiments of the invention in terms of a method. However, one should also understand it to represent a machine-accessible medium having recorded, encoded or otherwise represented thereon instructions, routines, operations, control codes, or the like, that when executed by or otherwise utilized by an electronic system, cause the electronic system to perform the methods as described above or other embodiments thereof that are within the scope of this disclosure. Moreover, the method can be implemented in digital hardware logic or in a combination of hardware and the machine-accessible medium having recorded, encoded or otherwise represented thereon instructions, routines, operations, control codes, or the like, that when executed by or otherwise utilized by an electronic system, cause the electronic system to perform the methods as described above or other embodiments thereof.

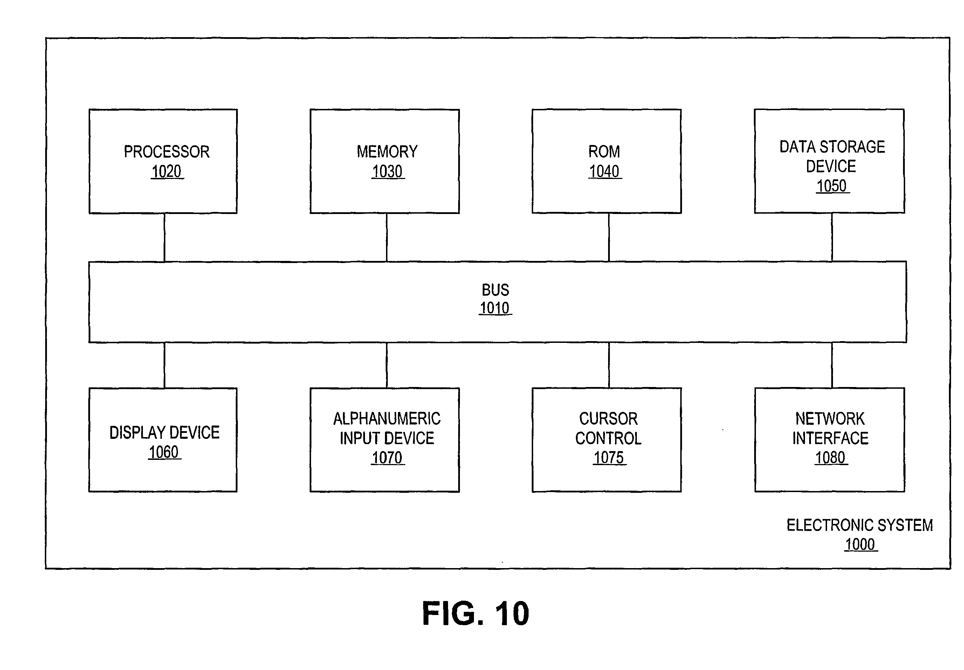

**Fig. 10** is a block diagram of one embodiment of an electronic system. The electronic system is intended to represent a range of electronic systems, including, for example, a personal computer, a personal digital assistant (PDA), a laptop or palmtop computer, a cellular phone, a computer system, a network access device, etc. Other electronic systems can include more, fewer and/or different components. The methods of Fig. 3 and Fig. 8 can be implemented as sequences of instructions executed by the electronic system. The sequences of instructions can be stored by the electronic system, or the instructions can be received by the electronic system (e.g., via a network connection). The electronic system can be coupled to a wired network, e.g., via a cable such as a coaxial cable or twisted-pair cable, a wireless network, e.g., via radio or satellite signals, or a combination thereof.

Electronic system 1000 includes a bus 1010 or other communication device to communicate information, and processor 1020 coupled to bus 1010 to process information. While electronic system 1000 is illustrated with a single processor, electronic system 1000 can include multiple processors and/or co-processors.

Electronic system 1000 further includes random access memory (RAM) or other dynamic storage device 1030 (referred to as memory), coupled to bus 1010 to store information and instructions to be executed by processor 1020. Memory 1030 also can be used to store temporary variables or other intermediate information while processor 1020 is executing instructions. Electronic system 1000 also includes read-only memory (ROM) and/or other static storage device 1040 coupled to bus 1010 to store static information and instructions for processor 1020. In addition, data storage device 1050 is coupled to bus 1010 to store information and instructions. Data storage device 1050 may comprise a magnetic disk (e.g., a hard disk) or optical disc (e.g., a CD-ROM) and corresponding drive.

Electronic system 1000 may further comprise a display device 1060, such as a cathode ray tube (CRT) or liquid crystal display (LCD), to display information to a user. Alphanumeric input device 1070, including alphanumeric and other keys, is typically coupled to bus 1010 to communicate information and command selections to processor 1020. Another type of user input device is cursor control 1075, such as a mouse, a trackball, or cursor direction keys to communicate direction information and command selections to processor 1020 and to control cursor movement on flat-panel display device 1060. Electronic system 1000 further includes network interface 1080 to provide access to a network, such as a local area network or wide area network.

Instructions are provided to memory from a machine-accessible medium, or an external storage device accessible via a remote connection (e.g., over a network via network interface 1080) providing access to one or more electronically-accessible media, etc. A machine-accessible medium includes any mechanism that provides (i.e., stores and/or transmits) information in a form readable by a machine (e.g., a computer). For example, a machine-accessible medium includes RAM; ROM; magnetic or optical storage medium; flash memory devices; electrical, optical, acoustical or other form of propagated signals (e.g., carrier waves, infrared signals, digital signals); etc.

In alternative embodiments, hard-wired circuitry can be used in place of or in combination with software instructions to implement the embodiments of the invention. Thus, the embodiments of the invention are not limited to any specific combination of hardware circuitry and software instructions.

Reference in the foregoing specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

## Claims

1. A method, comprising:
identifying (301) data (10) to be to be added to a trie (100, 400);
separating (304) the data into portions (20-50) having sizes based, at least in part, on sizes related to trie blocks (120-140, 410, 420) in the trie
associating a first trie entry (412) of a first trie block (410) with a first portion of data (20);
the method **characterised by**:
indicating in the first trie entry (412, 41204) that a second portion of the data (30, 40) is stored in a pruned-trie entry (42202, 42204), wherein the second portion of the data (30, 40) comprises one or more of the data portions (30, 40) that would otherwise relate to identifying one or more further trie entries of one or more further trie blocks (120, 130), and wherein the pruned-trie entry (42202) represents the concatenation of the one or more further trie entries and trie blocks (120, 130) identified by the second portion of the data {30, 40);
storing (306) the second portion of the data (30, 40) in the pruned-trie entry (42202, 42204); and indicating (308) in the pruned-trie entry (42202, 42204) the position the second portion of the data (30, 40) occupies relative to other portions of the data.

2. The method of claim 1, further comprising:
indicating (314) in the trie entry of the first trie block (410) a location (414) of a second trie block (420); and
indicating (314), in a trie entry (424) of the second trie block (420), a location (426) of additional data associated with the data (430), wherein a third portion of the data (50) identifies the trie entry (424) in the second trie block (420).

3. The method of claim 1, wherein the pruned-trie entry (42202, 42204) is located in the first trie block (410).

4. The method of claim 1, wherein indicating that the second portion of the data (30, 40) is stored in the pruned-trie entry (42202, 42204) of the first trie block (410) comprises storing the second portion of the data (30, 40) in the trie entry (412) of the first trie block (410).

5. The method of claim1, wherein the pruned-trie entry (42202, 42204) is located in the second trie block (420).

6. The method of claim 5, wherein indicating that the second portion of the data (30, 40) is stored in the pruned-trie entry (42202, 42204) comprises setting a bit (41204) to indicate that the second portion of the data (30, 40) is stored in the pruned-trie entry (42202, 42204).

7. The method of claim 5, wherein indicating that the second portion of the data (30, 40) is stored in the pruned-trie entry (42202, 42204) comprises setting a pointer to point to the pruned-trie entry (42202, 42204).

8. The method of claim 2, wherein the data (10) comprises a prefix.

9. The method of claim 8, wherein the additional data (430) comprises a next hop address.

10. The method of claim 1, wherein the sizes related to the trie block comprise the sizes of the first trie block, the second trie block and the pruned-trie entry.

11. The method of claim 1, wherein the first portion of the data (20) comprises a root portion and the second portion of the data (30, 40) comprises one or more portions following the root portion.

12. The method of claim 1, wherein the first portion of the data (20) comprises a non-root portion and the second portion of the data (30, 40) comprises one or more portions following the non-root portion.

13. The method of claim 1, wherein indicating the position of the second portion of the data (30, 40) comprises adding to the pruned-trie entry (42202, 42204) an indication of the position (42204) of the second portion of the data (30, 40).

14. The method of claim 13, wherein the indication of the position (42204) comprises a range of bit positions.

15. The method of claim 13, wherein the indication of the position (42204) comprises a mask that indicates bit positions.

16. A method, comprising:
identifying (802) in a data packet an address of a network device;
locating (804), in a first trie block (410) of a trie data structure (400), a first portion (20) of a prefix (10) that matches a corresponding first portion of the address, wherein the first portion (20) of the prefix (10) identifies a trie entry (412) of a first trie block (410);
the method **characterised by**:
determining (806) whether the trie entry (412) of the first trie block (410) indicates that a second portion (30, 40) of the prefix (10) is stored in a pruned-trie entry (42202, 42204), wherein the second portion (30, 40) of the prefix (10) comprises one or more portions of the prefix that would otherwise relate to identifying one or more further trie entries of one or more further trie blocks (120, 130), and wherein the pruned-trie entry (42202, 42204) represents the concatenation of the one or more further trie entries and trie blocks (120, 130) identified by the second portion (20, 30) of the prefix (10); and
if the trie entry (412) of the first trie block (410) indicates that the second portion (30, 40) of the prefix (10) is stored in the pruned-trie entry (42202,42204):
determining (808) from the trie entry (412) of the first trie block (410) a location of the pruned-trie entry (42202, 422U4);
determining (810) whether the second portion (30, 40) of the prefix (10) in the pruned-trie entry (42202, 42204) matches a second portion of the address that occupies the same position in the address as the second portion (30, 40) in the pruned-trie entry (42202, 42204) occupies in the prefix (10);
determining (814), if the second portion (30, 40) in the pruned-trie entry (42202, 42204) does match the second portion of the address, whether a trie entry (424) of a second trie block (420) indicates a location of a next hop address (426, 430), wherein the trie entry (424) of the second trie block (420) is identified by a third portion (50) of the prefix (10) matching a third portion of the address; and
determining the next hop address (816) from the trie entry (424) of the second trie block (420), if the trie entry (424) of the second trie block (420) indicates the location of the next hop address (426, 430).

17. The method of claim 16, wherein the address comprises a destination address.

18. The method of claim 16, wherein the pruned-trie entry (42202, 42204) is located in the first trie block (410).

19. The method of claim 18, wherein determining whether the trie entry (412) of the first trie block (410) indicates that the second portion (30, 40) of the prefix (10) is stored in the pruned-trie entry (42202, 42204) comprises determining whether the second portion (30, 40) of the prefix (10) is stored in the trie entry (412) of the first trie block (410).

20. The method of claim 16, wherein the pruned-trie entry (42202, 42204) is located in the second trie block (420).

21. The method of claim 20, wherein determining whether the trie entry (412) of the first trie block (410) indicates that the second portion (30, 40) of the prefix (10) is stored in the pruned-trie entry (42202, 42204) comprises determining whether a bit (41204) is set to indicate that the second portion (30, 40) of the prefix (10) is stored in the pruned-trie entry (42202, 42204).

22. The method of claim 20, wherein determining whether the trie entry (412) of the first trie block (410) indicates that the second portion (30, 40) of the prefix (10) is stored in the pruned-trie entry (42202, 42204) comprises determining whether a pointer is set to point to the pruned-trie entry (42202, 42204) of the second trie block (420).

23. The method of claim 16, further comprising determining from the pruned-trie entry (42202, 42204) the position the second portion (30, 40) of the prefix (10) occupies in the prefix (10).

24. The method of claim 23, wherein determining the position the second portion (30, 40) of the prefix (10) occupies in the prefix (10) comprises examining an indication of a range of bit positions of the second portion (30, 40) of the prefix (10) in the prefix (10).

25. The method of claim 23, wherein determining the position the second portion (30, 40) of the prefix (10) occupies in the prefix (10) comprises examining a mask indicating bit positions of the second portion (30, 40) of the prefix (10) in the prefix (10).

26. The method of claim 16, further comprising identifying (820), if the second portion (30, 40) of the prefix (10) in the pruned-trie entry (42202, 42204) fails to match the second portion of the address, the next hop address indicated by the trie entry (412) of the first trie block (410).

27. The method of claim 16, further comprising:
determining (830, 834, 836), if the trie entry (412) of the first trie block (410) fails to indicate that the pruned-trie entry (42202, 42204) includes the second portion (30, 40) of the prefix (10), whether a different trie entry of the second trie block (420) indicates a next hop address, wherein a third portion (50) of the prefix (10) that matches the second portion of the address identifies the different trie entry;
identifying (834), if the different trie entry of the second trie block (420) indicates the next hop address, the next hop address indicated by the different trie entry of the second trie block (420); and
identifying (820), if the different trie entry of the second trie block (420) fails to indicate the next hop address, the next hop address indicated by the trie entry (412) of the first trie block (410).

28. An article of manufacture comprising a machine-accessible medium (1030, 1050) including thereon sequences of instructions that, when executed, cause an electronic system (1000) to perform the method of any of claims 1 to 27.

29. An article of manufacture comprising:
means (1020, 1080) for identifying in a data packet an address of a network device;
means for locating (1020, 1030, 1050), in a first trie block (410) of a trie data structure (400), a first portion (20) of a prefix (10) that matches a corresponding first portion of the address, wherein the first portion (20) of the prefix (10) identifies a trie entry (412) of a first trie block (410);
means for determining (1020, 1030, 1050) whether the trie entry (412) of the first trie block (410) indicates that a second portion (30, 40) of the prefix (10) is stored in a pruned-trie entry (42202, 42204), wherein the second portion (30, 40) of the prefix (10) comprises one or more portions of the prefix that would otherwise relate to identifying one or more further trie entries of one or more further trie blocks (120, 130), and wherein the pruned-trie entry (42202, 42204) represents the concatenation of the one or more further trie entries and trie blocks (120, 130) identified by the second portion (30, 40) of the prefix (10); and
if the first trie entry (412) indicates that the second portion (30, 40) of the prefix (10) is stored in the pruned-trie entry (42202, 42204) for also:
determining from the trie entry (412) of the first trie block (410) a location of the pruned-trie entry (42202, 42204);
determining whether the second portion (30, 40) of the prefix (10) in the pruned-trie entry (42202, 42204) matches a second portion of the address that occupies the same position in the address as the second portion (30, 40) in the pruned-trie entry (42202, 42204) occupies in the prefix (10);
determining, if the second portion (30, 40) of the prefix (10) in the pruned-trie entry (42202, 42204) does match the second portion of the address, whether a trie entry (424) of a second trie block (420) indicates a location of a next hop address (426, 430), wherein the trie entry (424) of the second trie block (420) is identified by a third portion (50) of the prefix (10) matching a third portion of the address; and
determining the next hop address (426, 430) from the trie entry (424) of the second trie block (420), if the trie entry (424) of the second trie block (420) indicates the location of the next hop address (426, 430).

30. A system (1000), comprising:
a processor (1020);
a network interface (1080) coupled with the processor (1020); and
an article of manufacture (1010-1050, 1080) according to claim 29.

## Patentansprüche

1. Verfahren, umfassend:
Identifizieren (301) von Daten (10), die einem Trie (100, 400) hinzugefügt werden sollen; Trennen (304) der Daten in Abschnitte (20 - 50), die zumindest teilweise auf Größen basieren, die sich auf die Trie-Blöcke (120 - 140, 410, 420) in dem Trie (100, 400) beziehen;
Zuweisen eines ersten Trie-Eintrags (412) eines ersten Trie-Blocks (410) mit einem ersten Datenabschnitt (20);
wobei das Verfahren **gekennzeichnet ist durch**:
Anzeigen in dem ersten Trie-Eintrag (412, 41204), dass ein zweiter Datenabschnitt (30, 40) in einem verkürzten Trie-Eintrag (42202, 42204) gespeichert wird, wobei der zweite Datenabschnitt (30, 40) einen oder mehrere der Datenabschnitte (30, 40) umfasst, die andernfalls das Identifizieren von einem oder mehreren weiteren Trie-Einträgen eines oder mehrerer weiterer Trie-Blöcke (120, 130) betreffen würden, und wobei der verkürzte Trie-Eintrag (42202) die Verkettung des einen oder der mehreren weiteren Trie-Einträge und der Trie-Blöcke (120, 130) darstellt, die von dem zweiten Datenabschnitt (30, 40) identifiziert wurden;
Speichern (306) des zweiten Datenabschnitts (30, 40) in dem verkürzten Trie-Eintrag (42202, 42204); und
Anzeigen (308) der Position, die der zweite Datenabschnitt (30, 40) in Bezug auf die anderen Datenabschnitte belegt, in dem verkürzten Trie-Eintrag (42202, 42204).

2. Verfahren nach Anspruch 1, ferner umfassend:
Anzeigen (314) einer Position (414) eines zweiten Trie-Blocks (420) in dem Trie-Eintrag des ersten Trie-Blocks (410); und
Anzeigen (314) einer Position (426) von weiteren mit den Daten (430) verbundenen Daten in einem Trie-Eintrag (424) des zweiten Trie-Blocks (420), wobei ein dritter Datenabschnitt (50) den Eintrag (424) in dem zweiten Trie-Block (420) identifiziert.

3. Verfahren nach Anspruch 1, wobei sich der verkürzte Trie-Eintrag (42202, 42204) in dem ersten Trie-Block (410) befindet.

4. Verfahren nach Anspruch 1, wobei das Anzeigen, dass der zweite Datenabschnitt (30, 40) in dem verkürzten Trie-Eintrag (42202, 42204) des ersten Trie-Blocks (410) gespeichert ist, das Speichern des zweiten Datenabschnitts (30, 40) in dem Trie-Eintrag (412) des ersten Trie-Blocks (410) umfasst.

5. Verfahren nach Anspruch 1, wobei sich der verkürzte Trie-Eintrag (42202, 42204) in dem zweiten Trie-Block (420) befindet.

6. Verfahren nach Anspruch 5, wobei das Anzeigen, dass der zweite Datenabschnitt (30, 40) in dem verkürzten Trie-Eintrag (42202, 42204) gespeichert ist, das Einstellen eines Bits (41204) umfasst, um anzuzeigen, dass der zweite Datenabschnitt (30, 40) in dem verkürzten Trie-Eintrag (42202, 42204) gespeichert ist.

7. Verfahren nach Anspruch 5, wobei das Anzeigen, dass der zweite Datenabschnitt (30, 40) in dem verkürzten Trie-Eintrag (42202, 42204) gespeichert ist, das Einstellen eines Zeigers umfasst, um auf den verkürzten Trie-Eintrag (42202, 42204) zu zeigen.

8. Verfahren nach Anspruch 2, wobei die Daten (10) ein Präfix umfassen.

9. Verfahren nach Anspruch 8, wobei die zusätzlichen Daten (430) eine Next-Hop-Adresse umfassen.

10. Verfahren nach Anspruch 1, wobei sich die auf den Trie-Block beziehenden Größen die Größen des ersten Trie-Blocks, des zweiten Trie-Blocks und des verkürzten Trie-Blocks umfassen.

11. Verfahren nach Anspruch 1, wobei der erste Datenabschnitt (20) einen Hauptabschnitt und der zweite Datenabschnitt (30, 40) einen oder mehrere dem Hauptabschnitt folgende Abschnitte umfasst.

12. Verfahren nach Anspruch 1, wobei der erste Datenabschnitt (20) einen Nichthauptabschnitt und der zweite Datenabschnitt (30, 40) einen oder mehrere dem Nichthauptabschnitt folgende Abschnitte umfasst.

13. Verfahren nach Anspruch 1, wobei das Anzeigen der Position des zweiten Datenabschnitts (30, 40) das Hinzufügen einer Anzeige der Position (42204) des zweiten Datenabschnitts (30, 40) zu dem verkürzten Trie-Eintrag (42202, 42204) umfasst.

14. Verfahren nach Anspruch 13, wobei die Anzeige der Position (42204) einen Bereich aus Bitpositionen umfasst.

15. Verfahren nach Anspruch 13, wobei die Anzeige der Position (42204) eine Maske umfasst, die die Bitpositionen anzeigt.

16. Verfahren, umfassend:
Identifizieren (802) einer Adresse eines Netzwerkgerätes in einem Datenpaket;
Lokalisieren (804) eines ersten Abschnitts (20) eines Präfixes (10), der einem entsprechenden ersten Abschnitt der Adresse entspricht, in einem ersten Trie-Block (410) einer Trie-Datenstruktur (400), wobei der erste Abschnitt (20) des Präfixes (10) einen Trie-Eintrag (412) eines ersten Trie-Blocks (410) identifiziert;
wobei das Verfahren **gekennzeichnet ist durch**:
Bestimmen (806), ob der Trie-Eintrag (412) des ersten Trie-Blocks (410) anzeigt, dass ein zweiter Abschnitt (30, 40) des Präfixes (10) in einem verkürzten Trie-Eintrag (42202, 42204) gespeichert ist, wobei der zweite Abschnitt (30, 40) des Präfixes (10) einen oder mehrere Abschnitte des Präfixes umfasst, die sich andernfalls auf das Identifizieren von einem oder mehreren weiteren Trie-Einträgen eines oder mehrerer weiterer Trie-Blöcke (120, 130) beziehen würden, und wobei der verkürzte Trie-Eintrag (42202, 42204) die Verkettung des einen oder der mehreren weiteren Trie-Einträge und Trie-Blöcke (120, 130) darstellt, die von dem zweiten Abschnitt (20, 30) des Präfixes (10) identifiziert wurden; und
wenn der Trie-Eintrag (412) des ersten Trie-Blocks (410) anzeigt, dass der zweite Abschnitt (30, 40) des Präfixes (10) in dem verkürzten Trie-Eintrag (42202, 42204) gespeichert ist:
Bestimmen (808) einer Position des verkürzten Trie-Eintrags (42202, 42204) aus dem Trie-Eintrag (412) des ersten Trie-Blocks (410);
Bestimmen (810), ob der zweite Abschnitt (30, 40) des Präfixes (10) in dem verkürzten Trie-Eintrag (42202, 42204) mit einem zweiten Abschnitt der Adresse übereinstimmt, welcher dieselbe Position in der Adresse wie der zweite Abschnitt (30, 40) in dem verkürzten Trie-Eintrag (42202, 42204) in dem Präfix (10) besetzt;
Bestimmen (814), wenn der zweite Abschnitt (30, 40) in dem verkürzten Trie-Eintrag (42202, 42204) nicht mit dem zweiten Abschnitt der Adresse übereinstimmt, ob ein Trie-Eintrag (424) eines zweiten Trie-Blocks (420) eine Position einer Next-Hop-Adresse (426, 430) anzeigt, wobei der Trie-Eintrag (424) des zweiten Trie-Blocks (420) von einem dritten Abschnitt (50) des Präfixes (10) identifiziert wird, der mit einem dritten Abschnitt der Adresse übereinstimmt; und
Bestimmen der Next-Hop-Adresse (816) aus dem Trie-Eintrag (424) des zweiten Trie-Blocks (420), wenn der Trie-Eintrag (424) des zweiten Trie-Blocks (420) die Position der Next-Hop-Adresse (426, 430) anzeigt.

17. Verfahren nach Anspruch 16, wobei die Adresse eine Zieladresse umfasst.

18. Verfahren nach Anspruch 16, wobei sich der verkürzte Trie-Eintrag (42202, 42204) in dem ersten Trie-Block (410) befindet.

19. Verfahren nach Anspruch 18, wobei das Bestimmen, ob der Trie-Eintrag (412) des ersten Trie-Blocks (410) anzeigt, dass der zweite Abschnitt (30, 40) des Präfixes (10) in dem verkürzten Trie-Eintrag (42202, 42204) gespeichert ist, das Bestimmen umfasst, ob der zweite Abschnitt (30, 40) des Präfixes (10) in dem Trie-Eintrag (412) des ersten Trie-Blocks (410) gespeichert ist.

20. Verfahren nach Anspruch 16, wobei sich der verkürzte Trie-Eintrag (42202, 42204) in dem zweiten Trie-Block (420) befindet.

21. Verfahren nach Anspruch 20, wobei das Bestimmen, ob der Trie-Eintrag (412) des ersten Trie-Blocks (410) anzeigt, dass der zweite Abschnitt (30, 40) des Präfixes (10) in dem verkürzten Trie-Eintrag (42202, 42204) gespeichert ist, das Bestimmen umfasst, ob ein Bit (41204) eingerichtet ist, um anzuzeigen, dass der zweite Abschnitt (30, 40) des Präfixes (10) in dem verkürzten Trie-Eintrag (42202, 42204) gespeichert ist.

22. Verfahren nach Anspruch 20, wobei das Bestimmen, ob der Trie-Eintrag (412) des ersten Trie-Blocks (410) anzeigt, dass der zweite Abschnitt (30, 40) des Präfixes (10) in dem verkürzten Trie-Eintrag (42202, 42204) gespeichert ist, das Bestimmen umfasst, ob ein Zeiger eingerichtet ist, um auf den verkürzten Trie-Eintrag (42202, 42204) des zweiten Trie-Blocks (420) zu zeigen.

23. Verfahren nach Anspruch 16, ferner umfassend das Bestimmen der Position, die der zweite Abschnitt (30, 40) des Präfixes (10) in dem Präfix (10) belegt, aus dem verkürzten Trie-Eintrag (42202, 42204).

24. Verfahren nach Anspruch 23, wobei das Bestimmen der Position, die der zweite Abschnitt (30, 40) des Präfixes (10) in dem Präfix (10) belegt, das Prüfen einer Anzeige eines Bereichs aus Bitpositionen des zweiten Abschnitts 830, 40) des Präfixes (10) in dem Präfix (10) umfasst.

25. Verfahren nach Anspruch 23, wobei das Bestimmen der Position, die der zweite Abschnitt (30, 40) des Präfixes (10) in dem Präfix (10) belegt, das Prüfen einer Maske umfasst, die die Bitpositionen des zweiten Abschnitts (30, 40) des Präfixes (10) in dem Präfix (10) anzeigt.

26. Verfahren nach Anspruch 16, ferner umfassend das Identifizieren (820), wenn der zweite Abschnitt (30, 40) des Präfixes (10) in dem verkürzten Trie-Eintrag (42202, 42204) nicht mit dem zweiten Abschnitt der Adresse übereinstimmt, der Next-Hop-Adresse, die von dem Trie-Eintrag (412) des ersten Trie-Blocks (410) angezeigt wird.

27. Verfahren nach Anspruch 16, ferner umfassend:
Bestimmen (830, 834, 836), wenn der Trie-Eintrag (412) des ersten Trie-Blocks (410) nicht anzeigt, dass der verkürzte Trie-Eintrag (42202, 42204) den zweiten Abschnitt (30, 40) des Präfixes (10) umfasst, ob ein anderer Trie-Eintrag des zweiten Trie-Blocks (420) eine Next-Hop-Adresse anzeigt, wobei ein dritter Abschnitt (50) des Präfixes (10), der mit dem zweiten Abschnitt der Adresse übereinstimmt, den anderen Trie-Eintrag identifiziert;
Identifizieren (834), wenn der andere Trie-Eintrag des zweiten Trie-Blocks (420) die Next-Hop-Adresse anzeigt, der Next-Hop-Adresse, die von dem anderen Trie-Eintrag des zweiten Trie-Blocks (420) angezeigt wird; und
Identifizieren (820), wenn der andere Trie-Eintrag des zweiten Trie-Blocks (420) die Next-Hop-Adresse nicht anzeigt, der Next-Hop-Adresse, die von dem Trie-Eintrag (412) des ersten Trie-Blocks (410) angezeigt wird.

28. Artikel, umfassend ein maschinenlesbares Medium (1030, 1050), einschließlich Anweisungssequenzen, die, wenn ausgeführt, bewirken, dass ein elektronisches System (1000) das Verfahren nach Anspruch 1 bis 27 durchführt.

29. Artikel, umfassend:
Mittel (1020, 1080) zum Identifizieren einer Adresse eines Netzwerkgerätes in einem Datenpaket;
Mittel zum Lokalisieren (1020, 1030, 1050) einer Trie-Datenstruktur (400) eines ersten Abschnitts (20) eines Präfixes (10) in einem ersten Trie-Block (410), der mit einem entsprechenden ersten Abschnitt der Adresse übereinstimmt, wobei der erste Abschnitt (20) des Präfixes (10) einen Trie-Eintrag (412) eines ersten Trie-Blocks (410) identifiziert;
Mittel zum Bestimmen (1020, 1030, 1050), ob der Trie-Eintrag (412) des ersten Trie-Blocks (410) anzeigt, dass ein zweiter Abschnitt (30, 40) des Präfixes (10) in einem verkürzten Trie-Eintrag (42202, 42204) gespeichert ist, wobei der zweite Abschnitt (30, 40) des Präfixes (10) einen oder mehrere Abschnitte des Präfixes umfasst, die sich andernfalls auf das Identifizieren von einem oder mehreren weiteren Trie-Einträgen eines oder mehrerer weiterer Trieblöcke (120, 130) beziehen würden, und wobei der verkürzte Trie-Eintrag (42202, 42204) die Verkettung des einen oder der mehreren weiteren Trie-Einträge und Trie-Blocks (120, 130) darstellt, die von dem zweiten Abschnitt (30, 40) des Präfixes (10) identifiziert wurden; und wenn der erste Trie-Eintrag (412) anzeigt, dass der zweite Abschnitt (30, 40) des Präfixes (10) in dem verkürzten Trie-Eintrag (42202, 42204) gespeichert ist auch zum;
Bestimmen einer Position des verkürzten Trie-Eintrages (42202, 42204) aus dem Trie-Eintrag (412) des ersten Trie-Blocks (410);
Bestimmen, ob der zweite Abschnitt (30, 40) des Präfixes (10) in dem verkürzten Trie-Eintrag (42202, 42204) mit einem zweiten Abschnitt der Adresse übereinstimmt, welcher dieselbe Position in der Adresse belegt, wie sie der zweite Abschnitt (30, 40) in dem verkürzten Trie-Eintrag (42202, 42204) in dem Präfix (10) belegt;
Bestimmen, wenn der zweite Abschnitt (30, 40) des Präfixes (10) in dem verkürzten Trie-Eintrag (42202, 42204) mit dem zweiten Abschnitt der Adresse übereinstimmt, ob ein Trie-Eintrag (424) eines zweiten Trie-Blocks (420) eine Position der Next-Hop-Adresse (426, 430) anzeigt, wobei der Trie-Eintrag (424) des zweiten Trie-Blocks (420) von einem dritten Abschnitt (50) des Präfixes (10) identifiziert wird, der mit einem dritten Abschnitt der Adresse übereinstimmt; und
Bestimmen der Next-Hop-Adresse (426, 430) von dem Trie-Eintrag (424) des zweiten Trie-Blocks (420), wenn der Trie-Eintrag (424) des zweiten Trie-Blocks (420) die Position der Next-Hop-Adresse (426, 430) anzeigt.

30. System (1000), umfassend:
einen Prozessor (1020);
eine Netzwerkschnittstelle (1080), die mit dem Prozessor (1020) gekoppelt ist; und einen Artikel (1010 - 1050, 1080) nach Anspruch 29.

## Revendications

1. Procédé comprenant :
l'identification (301) de données (10) à ajouter à une arborescence (100, 400) ;
la séparation (304) des données en parties (20-50) ayant des tailles basées, au moins en partie, sur des tailles liées à des blocs d'arborescence (120-140, 410, 420) dans l'arborescence (100, 400) ;
l'association d'une première entrée d'arborescence (412) d'un premier bloc d'arborescence (410) avec une première partie de données (20) ;
le procédé **caractérisé par** :
l'indication dans la première entrée d'arborescence (412, 41204) qu'une seconde partie des données (30, 40) est stockée dans une entrée d'arborescence élaguée (42202, 42204), dans lequel la seconde partie des données (30, 40) comprend une ou plusieurs parties de données (30, 40) qui sinon se rapporteraient à l'identification d'une ou plusieurs autres entrées d'arborescence d'un ou plusieurs autres blocs d'arborescence (120, 130), et dans lequel l'entrée d'arborescence élaguée (42202) représente la concaténation d'une ou plusieurs autres entrées d'arborescence et les blocs d'arborescence (120, 130) identifiés par la seconde partie des données (30, 40) ;
le stockage (306) de la seconde partie des données (30, 40) dans l'entrée d'arborescence élaguée (42202, 42204) ; et
l'indication (308) dans l'entrée d'arborescence élaguée (42202, 42204) de la position que la seconde partie des données (30, 40) occupe par rapport aux autres parties des données.

2. Procédé selon la revendication 1, comprenant en outre :
l'indication (314) dans l'entrée d'arborescence du premier bloc d'arborescence (410) d'un emplacement (414) d'un second bloc d'arborescence (420) ; et
l'indication (314), dans une entrée d'arborescence (424) du second bloc d'arborescence (420), d'un emplacement (426) de données additionnelles associées aux données (430), dans lequel une troisième partie des données (50) identifie l'entrée d'arborescence (424) dans le second bloc d'arborescence (420).

3. Procédé selon la revendication 1, dans lequel l'entrée d'arborescence élaguée (42202, 42204) est située dans le premier bloc d'arborescence (410).

4. Procédé selon la revendication 1, dans lequel l'indication que la seconde partie des données (30, 40) est stockée dans l'entrée d'arborescence élaguée (42202, 42204) du premier bloc d'arborescence (410) comprend le stockage de la seconde partie des données (30, 40) dans l'entrée d'arborescence (412) du premier bloc d'arborescence (410).

5. Procédé selon la revendication 1, dans lequel l'entrée d'arborescence élaguée (42202, 42204) est située dans le second bloc d'arborescence (420).

6. Procédé selon la revendication 5, dans lequel l'indication que la seconde partie des données (30, 40) est stockée dans l'entrée d'arborescence élaguée (42202, 42204) comprend le réglage d'un bit (41204) pour indiquer que la seconde partie des données (30, 40) est stockée dans l'entrée d'arborescence élaguée (42202, 42204).

7. Procédé selon la revendication 5, dans lequel l'indication que la seconde partie des données (30, 40) est stockée dans l'entrée d'arborescence élaguée (42202, 42204) comprend le réglage d'un pointeur pour pointer à l'entrée d'arborescence élaguée (42202, 42204).

8. Procédé selon la revendication 2, dans lequel les données (10) comprennent un préfixe.

9. Procédé selon la revendication 8, dans lequel les données additionnelles (430) comprennent une adresse de saut suivant.

10. Procédé selon la revendication 1, dans lequel les tailles liées au bloc d'arborescence comprennent les tailles du premier bloc d'arborescence, du second bloc d'arborescence et de l'entrée d'arborescence élaguée.

11. Procédé selon la revendication 1, dans lequel la première partie des données (20) comprend une partie de racine et la seconde partie des données (30, 40) comprend une ou plusieurs parties suivant la partie de racine.

12. Procédé selon la revendication 1, dans lequel la première partie des données (20) comprend une partie de non-racine et la seconde partie des données (30, 40) comprend une ou plusieurs parties suivant la partie de non-racine.

13. Procédé selon la revendication 1, dans lequel l'indication de la position de la seconde partie de données (30, 40) comprend l'addition à l'entrée d'arborescence élaguée (42202, 42204) d'une indication de la position (42204) de la seconde partie des données (30, 40).

14. Procédé selon la revendication 13, dans lequel l'indication de la position (42204) comprend une plage de positions de bits.

15. Procédé selon la revendication 13, dans lequel l'indication de la position (42204) comprend un masque qui indique des positions de bits.

16. Procédé comprenant :
l'identification (802) dans un paquet de données d'une adresse d'un dispositif de réseau ;
la localisation (804), dans un premier bloc d'arborescence (410) d'une structure de données d'arborescence (400), d'une première partie (20) d'un préfixe (10) qui correspond à une première partie correspondante de l'adresse, dans lequel la première partie (20) du préfixe (10) identifie une entrée d'arborescence (412) du premier bloc d'arborescence (410) ;
le procédé étant **caractérisé par** :
la détermination (806) si l'entrée d'arborescence (412) du premier bloc d'arborescence (410) indique qu'une seconde partie (30, 40) du préfixe (10) est stockée dans une entrée d'arborescence élaguée (42202, 42204), dans lequel la seconde partie (30, 40) du préfixe (10) comprend une ou plusieurs parties du préfixe qui sinon seraient liées à l'identification d'une ou plusieurs autres entrées d'arborescence d'un ou plusieurs autres blocs d'arborescence (120, 130), et dans lequel l'entrée d'arborescence élaguée (42202, 42204) représente la concaténation d'une ou plusieurs autres entrées d'arborescence et les blocs d'arborescence (120, 130) identifiés par la seconde partie (20, 30) du préfixe (10) ; et
si l'entrée d'arborescence (412) du premier bloc d'arborescence (410) indique que la seconde partie (30, 40) du préfixe (10) est stockée dans l'entrée d'arborescence élaguée (42202, 42204) ;
la détermination (808) à partir de l'entrée d'arborescence (412) du premier bloc d'arborescence (410) d'un emplacement de l'entrée d'arborescence élaguée (42202,42204);
la détermination (810) si la seconde partie (30, 40) du préfixe (10) dans la partie d'arborescence élaguée (42202, 42204) correspond à une seconde partie de l'adresse qui occupe la même position dans l'adresse que la seconde partie (30, 40) dans l'entrée d'arborescence élaguée (42202, 42204) occupe dans le préfixe (10) ;
la détermination (814), si la seconde partie (30, 40) dans l'entrée d'arborescence élaguée (42202, 42204) correspond à la seconde partie de l'adresse, si une entrée d'arborescence (424) d'un second bloc d'arborescence (420) indique un emplacement d'une adresse de saut suivant (426, 430), dans lequel l'entrée d'arborescence (424) du second bloc d'arborescence (420) est identifiée par une troisième partie (50) du préfixe (10) correspondant à une troisième partie de l'adresse ; et
la détermination de l'adresse de saut suivant (816) à partir de l'entrée d'arborescence (424) du second bloc d'arborescence (420), si l'entrée d'arborescence (424) du second bloc d'arborescence (420) indique l'emplacement de l'adresse de saut suivant (426, 430).

17. Procédé selon la revendication 16, dans lequel l'adresse comprend une adresse de destination.

18. Procédé selon la revendication 16, dans lequel l'entrée d'arborescence élaguée (42202, 42204) est située dans le premier bloc d'arborescence (410).

19. Procédé selon la revendication 18, dans lequel la détermination si l'entrée d'arborescence (412) du premier bloc (410) indique que la seconde partie (30, 40) du préfixe (10) est stockée dans l'entrée d'arborescence élaguée (42202, 42204) comprend la détermination si la seconde partie (30, 40) du préfixe (10) est stockée dans l'entrée d'arborescence (412) du premier bloc d'arborescence (410).

20. Procédé selon la revendication 16, dans lequel l'entrée d'arborescence élaguée (42202, 42204) est située dans le second bloc d'arborescence (420).

21. Procédé selon la revendication 20, dans lequel la détermination si l'entrée d'arborescence (412) du premier bloc d'arborescence (410) indique que la seconde partie (30, 40) du préfixe (10) est stockée dans l'entrée d'arborescence élaguée (42202, 42204) comprend la détermination si un bit (41204) est réglé pour indiquer que la seconde partie (30, 40) du préfixe (10) est stockée dans l'entrée d'arborescence élaguée (42202, 42204).

22. Procédé selon la revendication 20, dans lequel la détermination si l'entrée d'arborescence (412) du premier bloc d'arborescence (410) indique que la seconde partie (30, 40) du préfixe (10) est stockée dans l'entrée d'arborescence élaguée (42202, 42204) comprend la détermination si un pointeur est réglé pour pointer à l'entrée d'arborescence élaguée (42202, 42204) du second bloc d'arborescence (420).

23. Procédé selon la revendication 16, comprenant en outre la détermination à partir de l'entrée d'arborescence élaguée (42202, 42204) de la position que la seconde partie (30, 40) du préfixe (10) occupe dans le préfixe (10).

24. Procédé selon la revendication 23, dans lequel la détermination de la position que la seconde partie (30, 40) du préfixe (10) occupe dans le préfixe (10) comprend l'examen d'une indication d'une gamme de positions de bits de la seconde partie (30, 40) du préfixe (10) dans le préfixe (10).

25. Procédé selon la revendication 23, dans lequel la détermination de la position que la seconde partie (30, 40) du préfixe (10) occupe dans le préfixe (10) comprend l'examen d'un masque indiquant des positions de bits de la seconde partie (30, 40) du préfixe (10) dans le préfixe (10).

26. Procédé selon la revendication 16, comprenant en outre l'identification (820), si la seconde partie (30, 40) du préfixe (10) dans l'entrée d'arborescence élaguée (42202, 42204) ne correspond pas à la seconde partie de l'adresse, l'adresse de saut suivant indiquée par l'entrée d'arborescence (412) du premier bloc d'arborescence (410).

27. Procédé selon la revendication 16, comprenant en outre :
la détermination (830, 834, 836), si l'entrée d'arborescence (412) du premier bloc d'arborescence (410) n'indique pas que l'entrée d'arborescence élaguée (42202, 42204) comprend la seconde partie (30, 40) du préfixe (10), si une entrée d'arborescence différente du second bloc d'arborescence (420) indique une adresse de saut suivant, où une troisième partie (50) du préfixe (10) qui correspond à la seconde partie de l'adresse identifie l'entrée d'arborescence différente ;
l'identification (834), si l'entrée d'arborescence différente du second bloc d'arborescence (420) indique l'adresse de saut suivant, de l'adresse de saut suivant indiquée par l'entrée d'arborescence différente du second bloc d'arborescence (420) ; et
l'identification (820), si l'entrée d'arborescence différente du second bloc d'arborescence (420) n'indique pas l'adresse de saut suivant, de l'adresse de saut suivant indiquée par l'entrée d'arborescence (412) du premier bloc d'arborescence (410).

28. Article de fabrication comprenant un support accessible par machine (1030, 1050) comprenant sur celle-ci des séquences d'instructions qui, lorsqu'elles sont exécutées, conduisent un système électronique (1000) à réaliser le procédé d'une quelconque des revendications 1 à 27.

29. Article de fabrication comprenant :
des moyens (1020, 1080) pour identifier dans un paquet de données une adresse d'un dispositif de réseau ;
des moyens pour situer (1020, 1030, 1050), dans un premier bloc d'arborescence (410) d'une structure de données d'arborescence (400), une première partie (20) d'un préfixe (10) qui correspond à une première partie correspondante de l'adresse, où la première partie (20) du préfixe (10) identifie une entrée d'arborescence (412) d'un premier bloc d'arborescence (410) ;
des moyens pour déterminer (1020, 1030, 1050) si l'entrée d'arborescence (412) du premier bloc d'arborescence (410) indique qu'une seconde partie (30, 40) du préfixe (10) est stockée dans une entrée d'arborescence élaguée (42202, 42204), où la seconde partie (30, 40) du préfixe (10) comprend une ou plusieurs parties du préfixe qui sinon seraient liées à l'identification d'une ou plusieurs autres entrées d'arborescence d'un ou plusieurs autres blocs d'arborescence (120, 130), et où l'entrée d'arborescence élaguée (42202, 42204) représente la concaténation d'une ou plusieurs autres entrées d'arborescence et les blocs d'arborescence (120, 130) identifiés par la seconde partie (30, 40) du préfixe (10) et, si la première entrée d'arborescence (412) indique que la seconde partie (30, 40) du préfixe (10) est stockée dans l'entrée d'arborescence élaguée (42202, 42204), pour aussi :
déterminer à partir de l'entrée d'arborescence (412) du premier bloc d'arborescence (410) d'un emplacement de l'entrée d'arborescence élaguée (42202, 42204) ;
déterminer si la seconde partie (30, 40) du préfixe (10) dans l'entrée d'arborescence élaguée (42202, 42204) correspond à une seconde partie de l'adresse qui occupe la même position dans l'adresse que la seconde partie (30, 40) dans l'entrée d'arborescence élaguée (42202, 42204) occupe dans le préfixe (10) ;
déterminer, si la seconde partie (30, 40) du préfixe (10) dans l'entrée d'arborescence élaguée (42202, 42204) correspond à la seconde partie de l'adresse, si une entrée d'arborescence (424) d'un second bloc d'arborescence (420) indique un emplacement d'une adresse de saut suivant (426, 430), où l'entrée d'arborescence (424) du second bloc d'arborescence (420) est identifiée par une troisième partie (50) du préfixe (10) correspondant à une troisième partie de l'adresse ; et
déterminer l'adresse de saut suivant (426, 430) à partir de l'entrée d'arborescence (424) du second bloc d'arborescence (420), si l'entrée d'arborescence (424) du second bloc d'arborescence (420) indique l'emplacement de l'adresse de saut suivant (426, 430).

30. Système (1000) comprenant :
un processeur (1020) ;
une interface de réseau (1080) couplée au processeur (1020) ; et
un article de fabrication (1010-1050, 1080) selon la revendication 29.
